(19) Europäisches Patentamt
European Patent Office
Office européen des brevets

(11) **EP 1 124 356 B1**

(12) **EUROPEAN PATENT SPECIFICATION**

(45) Date of publication and mention
of the grant of the patent:
**25.06.2003 Bulletin 2003/26**

(51) Int Cl.⁷: **H04L 12/56**

(21) Application number: **00307392.1**

(22) Date of filing: **29.08.2000**

(54) **Guaranteeing types of service in a packet-based system**

Garantierter Servicetyp in einem paketbasierten System

Type de service garanti dans un système à paquets

(84) Designated Contracting States:
**DE FR GB**

(30) Priority: **08.02.2000 US 500390**

(43) Date of publication of application:
**16.08.2001 Bulletin 2001/33**

(73) Proprietor: **LUCENT TECHNOLOGIES INC.**
**Murray Hill, New Jersey 07974-0636 (US)**

(72) Inventors:
• **Abraham, Santosh P.**
**Keasbey, New Jersey 08832 (US)**
• **Chuah, Mooi Choo**
**Marlboro, New Jersey 007746 (US)**
• **Ho, Jean Tu**
**Basking Ridge, New Jersey 07920 (US)**
• **Rai, Girish**
**Bartlett, Illinois 60103 (US)**

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(56) References cited:
**EP-A- 0 817 436          EP-A- 0 977 402**
**WO-A-00/30307          WO-A-99/21313**

• **REARDON M: "TRAFFIC SHAPERS: IP IN CRUISE CONTROL" DATA COMMUNICATIONS,MCGRAW HILL. NEW YORK,US, vol. 27, no. 13, 21 September 1998 (1998-09-21), pages 66,68-73, XP000785256 ISSN: 0363-6399**

**Description**

**FIELD OF THE INVENTION**

This invention relates generally to communications and, more particularly, to packet communications systems.

**BACKGROUND OF THE INVENTION**

Access to the Internet is now occurring via the wireless domain. For example, it is now possible to purchase small hand-held devices such as the Palm VII™, which provide access to the Internet via a wireless connection to a service provider. Further, at least one equipment manufacturer is advertising a wireless Internet access system (i.e., the Wireless Internet Access System from Lucent Technologies Inc.). In such an environment equipment manufacturers and service providers are becoming concerned about "Quality-of-Service" (QoS) issues in providing such service to their customers. Some examples of QoS issues are guarantees on, e.g., bit rate, delay and packet loss.

WO-A-99 21313 describes methods and systems for a wireless ATM network with high quality of service scheduling are provided. In one embodiment, a wireless ATM network with per-VC scheduling, a virtual framer for periodical, requestless scheduling, and a virtual shaper for request-based scheduling are provided.

**Summary of the Invention**

A traffic management system and a method according to the invention are as set out in the independent claims. Preferred form are set out in the dependent claims.

We have realized a traffic management system for addressing quality-of-service concerns in a packet system. In particular, and in accordance with the invention, a peak-rate shaper is combined with weighted fair queuing scheduler for providing quality of service guarantees to a number of user connections.

In an embodiment of the invention, a front-end peak-rate shaper is combined with weighted fair queuing scheduler for providing both peak rate shaping and an average bandwidth guarantee to a number of user connections. In addition, a back-end peak-rate shaper is combined with the weighted fair queuing scheduler for ensuring packets are not transmitted at a data rate higher than the available downlink/uplink bandwidth.

**BRIEF DESCRIPTION OF THE DRAWING**

FIG. 1 shows an illustrative block diagram of a traffic management system in accordance with the principles of the invention;

FIG. 2 shows an illustrative method for use in a back-end peak rate shaper in accordance with the principles of the invention;

FIG. 3 shows a portion of a wireless internet access network embodying the principles of the invention;

FIGs. 4 and 5 show illustrative uplink embodiments of a traffic management system in accordance with the principles of the invention;

FIGs. 6 - 7 show other illustrative embodiments of a traffic management system; and

FIG. 8 shows an illustrative high-level block diagram of a packet server for use in accordance with the principles of the invention.

**DETAILED DESCRIPTION**

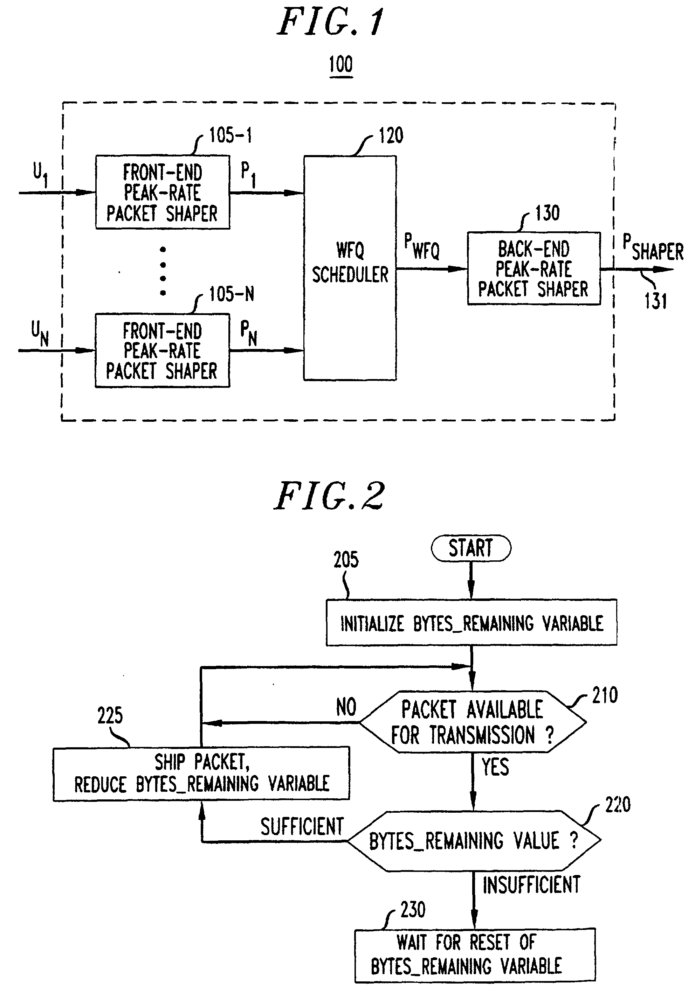

A portion of a communications system comprising an illustrative traffic management system 100 in accordance with the principles of the invention is shown in FIG. 1. Other than the inventive concept, the elements shown in FIG. 1 are well known and will not be described in detail. For example, weighted fair queuing schedulers, by themselves, are known in the art (e.g., see "A Self-Clocked Fair Queueing Scheme for Broadband Applications," J. Golestani, Proceeding of IEEE Infocom 1994, pp 5c.1.1-5c1.11). Similarly, peak rate shapers (also known as "traffic shapers"), by themselves, are known in the art (e.g., see "ISDN and Broadband ISDN with Frame Relay and ATM," by W. Stallings, Prentice Hall, 1995, pp 382 - 406, 492 - 516). Although shown as single block elements, the elements of traffic management system 100 include stored-program-control processors, memory, and appropriate interface cards (not shown). The term "packet server" as used herein refers to any packet processor, illustrations of which are the above-mentioned elements of traffic management system 100. In addition, the inventive concept is implemented using conventional programming techniques, which as such, will not be described herein. Since call admission techniques are not necessary to the inventive concept, it is assumed that each user negotiates with a call admission process (not shown) to establish a committed information rate (CIR) in bits per second (bps). The CIR for a particular user is referred to herein as $CIR_i$, where the number of users is equal to $N$, and $1 \leq i \leq N$.

Traffic management system 100 comprises a number, or a set, of front-end peak-rate shapers 105-1 through 105-N for servicing $N$ users, each of which have an associated user packet flow $U_1$ through $U_N$; a weighted fair queuing (WFQ) scheduler 120; and a back-end peak-rate shaper 130.

The front-end peak rate shapers 105 are used to ensure that the peak rate of each connection is as negotiated with the network. For example, each peak-rate packet shaper implements a token generator (not shown), a user queue (not shown) and a transmission queue (not shown). The token generator repetitively generates token (in bytes) at the peak rate, $P_i$ for maximum burst size (in bytes), and is idle for a period $T_i$, such that the overall average token rate is equal to the CIR for that user, i.e., $CIR_i$. Every time a packet of user i arrives at a respective packet shaper that packet is passed through the system to the transmission queue if the packet shaper has a token large enough to accommodate the size of the newly arrived packet. Conversely, if a large enough token does not exist, the newly arrived packet is queued in the user queue until a token at least larger than, or equals to, its size is available. It is assumed that the front-end peak-rate packet shaper generates a service tag for each user packet flow, $U_i$. This service tag is based on the average bandwidth, $CIR_i$, negotiated by each user, and the length of the particular packet. Packets passed by a respective packet shaper to the transmission queue are tagged with their appropriate service tag (such tagging is described in the above-mentioned article by Golestani).

For example, each arriving packet, $p_k^i$, of a session $k$, is tagged with a service tag, $F_k^i$, before it is placed in the transmission queue (where $i = 1, 2, ...,$ and $k \in B$, and $B$ is the set of admitted connections). For each session, $k$, the service tags of the arriving packets are computed in an iterative fashion:

$$F_k^i = \frac{L_k^i}{r_k} + \max(F_k^{i-1}, \upsilon(a_k^i));\tag{1}$$

where $F_k^0 = 0$, $L_k^i$ is the length of the packet, $p_k^i$, in bytes; $r_k$ is the negotiated rate for the $k^{th}$ session; $a_k^i$ is the arrival time of the packet, $p_k^i$; and $\upsilon(a_k^i)$ is the system virtual time at the time of arrival, $a_k^i$, ("system virtual time" is known in the art, e.g., typically a counter (not shown) is updated).

The packets in the transmission queue are picked up for servicing by the weighted fair queuing (WFQ) scheduler 120 in increasing order of the associated service tags. As a result, WFQ scheduler 120 ensures that each connection gets a minimum of its negotiated average bandwidth. (As noted, it is assumed that the above-mentioned self-clocked fair queuing (SCFQ) scheme is used. However, the SCFQ scheme is merely illustrative and is not necessary to the inventive concept, any algorithm can be used.) It should be noted that if the incoming packet flows are further segregated by service class (described further below), WFQ scheduler 120 also transmits packets as a function of their service classification.

The back-end peak-rate shaper is used to ensure that the overall peak rate does not exceed the available bandwidth over the communications channel (here, represented by 131 of FIG. 1). The back-end peak-rate traffic shaper 130 operates as follows. It is assumed that $x\%$ of the total bandwidth ($B_{total}T$) is available for transmission of packets (as represented by packet flow $P_{shaper}$) from back-end peak-rate traffic shaper 130 over the outgoing communications channel (as represented by the arrow 131). ($B_{total}$ represents the total bandwidth, e.g., in bytes per interval of time and T represents an interval to time). A variable, $Bytes\_remaining$, is initialized to:

$$Bytes\_remaining = (x\%/100)(B_{total}T) - system\ overhead;\tag{2}$$

where *system overhead* represents the number of bytes taken up by control messages. For every packet that is sent out by back-end peak-rate shaper 130, the value of $Bytes\_remaining$ is reduced by:

$$Bytes\_remaining = Bytes\_remaining -$$

$$(Ceiling(pktsize/macfragment)*(mac\_fragment + mac\ overhead));\tag{3}$$

where,

    *pktsize* = packet size;

*macfragment* = size of a media access control (MAC) link layer fragment;
*macoverhead* = the number of bytes added by the media access control link layer; and
*Ceiling ()* - takes the smallest integer value that exceeds the value (i.e., rounds up to the next highest integer value).

Every T seconds the value of *Bytes_remaining* is reset to

$$(x\%/100)(B_{total}T). \tag{4}$$

An illustrative method for use in back-end peak-rate packet shaper 130 is shown in FIG. 2. Assume that FIG. 1 represents a portion of a downlink communications path to a mobile endpoint, e.g., from the Internet to wireless mobile stations (not shown). In step 205 of FIG. 2, the value of *Bytes_remaining* is initialized. In particular, an illustrative total available airlink bandwidth is 4000 bytes every 20 milli-seconds (ms), i.e., $B_{total}T$ = 4000 bytes. Of this, it is presumed that *x = 60%* is an available downlink bandwidth and there is no *system overhead* in the downlink direction, i. e., *Bytes_remaining = (60%/100)(4000) - 0 = 2400 bytes.* In step 210, back-end peak-rate packet shaper 130 waits for a packet is to be available for transmission downlink. Once a packet is available, the value of *Bytes_remaining* is checked in step 220. If the value of *Bytes_remaining* is sufficient to send at least one MAC fragment, the packet is shipped, i.e., transmitted, and the value of *Bytes_remaining* is reduced as shown in equation (3) in step 225, and back-end peak-rate packet shaper 130 waits for another packet. However, if the value of *Bytes_remaining* is not sufficient to send at least one MAC fragment, the packet is not shipped until 20 ms later as represented by step 230. Regardless, the value of *Bytes_remaining* is reset every 20 ms to 2400 bytes. In this example, it should be noted that to take care of the additional bandwidth required to do MAC layer retransmission, the value of *Bytes_remaining* can be initialized to e.g., 95% of 2400 bytes (indirectly reserving 5% for MAC layer retransmissions). (In terms of equation (2), this is $(x\%/100)(B_{total}T)(.95)$ - *system overhead,* however, the value of *system overhead* in this example is, as noted, zero.)

Alternatively, assume that FIG. 1 represents an uplink communications path from a mobile endpoint, e.g., from wireless mobile stations to the Internet (not shown) and the method illustrated in FIG. 2 is used. The illustrative total available airlink bandwidth, as noted above, is 4000 bytes. Of this, it is presumed that *x = 40%* is an available uplink bandwidth (recall, that 60% was dedicated to downlink transmission in the earlier example). In this example, the *system overhead* is not equal to zero and the value of *Bytes_remaining* is initialized as in equation (2). Here, the value of the *system overhead* variable is equal to an estimate of the overhead caused by beacon, MAC layer acknowledgements (Acks), and reservation slots messages in the uplink direction. In particular, *Bytes_remaining* is initialized to 1600 - *system overhead* (FIG. 2, step 205). Everytime a packet is available for transmission uplink, the value of *Bytes_remaining* is checked (FIG. 2, steps 210 and 220). If the value of *Bytes_remaining* is sufficient to send at least one MAC fragment, the packet is shipped, i.e., transmitted, and the value of *Bytes_remaining* is reduced as shown in equation (3) (FIG. 2, step 225). However, if the value of *Bytes_remaining* is not sufficient to send at least one MAC fragment, the packet is not shipped until 20 ms later (also referred to as a "dwell" time) (FIG. 2 step 230). Regardless, the value of *Bytes_remaining* is reset every dwell as shown in equation (2), i.e., (1600 - *system overhead*) (FIG. 2 step 230). In this example, it should be noted that to take care of the additional bandwidth required to do MAC layer retransmission, the value of *Bytes_remaining* can be initialized to e.g., ((1600)(.95) - *system overhead).*

It should be noted that for cases where the airlink bandwidth can vary significantly due to the fading phenomena, the following alternative closed-loop feedback mechanism can be used to estimate the available airlink bandwidth. Such estimates can than be used to replace the fixed numbers like 4000 bytes or 1600 bytes used above.

For example, assume the following definitions:

$B_{fix}$ - represents the fixed airlink bandwidth (this is known *a priori*); and
*T* - is an observation period, expressed as multiples of dwell times;

For the downlink direction, the access point (or, in the uplink direction, the wireless modem) estimates the downlink (uplink) available airlink bandwidth as follows:

(a) measure the number of bytes transmitted downlink (uplink) for the period *T*, this is $B_{tx}$;
(b) measure the number of bytes received uplink (downlink) for the period *T*, this is $B_{rx}$; and
(c) calculate $B_{total}$; the estimated airlink bandwidth, as a function of $(B_{tx}/B_{rx})$ (described below).

The estimated airlink bandwidth, $B_{total}$, can be calculated in a number of ways. Two illustrative calculations are shown below. In the first example,

$$B_{total} = Bfix \ (B_{tx}/B_{rx}). \tag{5}$$

This is also referred to as the "independent window version."

In the second example, a "sliding window" is used. In this example a portion of the previous calculation is used to calculate the current value. In particular,

$$success = (I - \alpha)success + \alpha(B_{tx}/B_{rx}); \tag{6}$$

and

$$B_{total} = (Bfix)(success). \tag{7}$$

where the variable *success* is initialized to the first calculation of $(B_{tx}/B_{rx})$; and $\alpha$ (which is related to how much of the previous calculation is remembered (e.g., its history)) is illustratively equal to 6;

Alternatively, one can use the values of $B_{fix}$ and monitor the downlink (uplink) buffer occupancy in the access point (wireless modem). Whenever the downlink (uplink) buffer occupancy exceeds a certain predefined threshold, a flow control message is sent to the wireless hub (or end system, i.e., the user terminal in the case of the wireless modem) to stop the flow of packets. When the buffer occupancy drops below a certain threshold, then another flow control message is sent to reactivate the flow of packets.

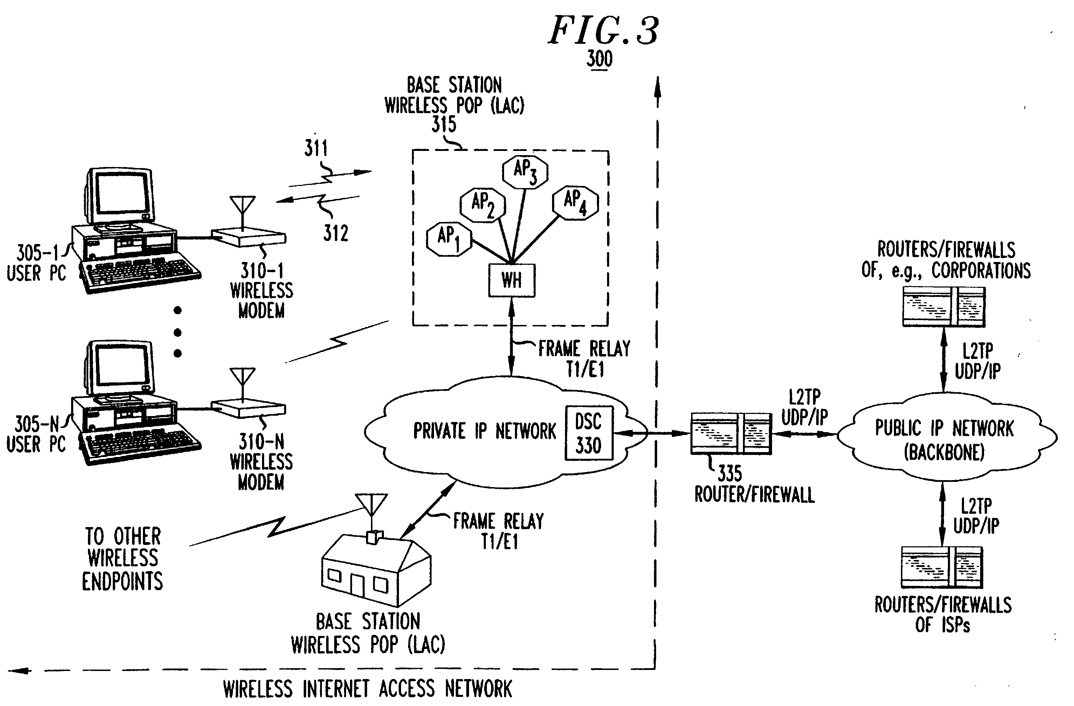

An illustrative application of the traffic management system is shown in FIG. 3, which illustrates a portion 300 of a wireless internet access system embodying the inventive concept. (Other than the inventive concept, an example of a wireless internet access system as illustrated in FIG. 3 is the Wireless Internet Access System from Lucent Technologies Inc.) Portion 300 comprises a number of base stations such as base station 315, which is an example of a wireless point-of-presence (POP) server that provides L2TP (Layer 2 Tunneling Protocol) access control (LAC). Each base station comprises a wireless hub (WH) that serves an area through a plurality of access points (e.g., $AP_1$, $AP_2$, $AP_3$ and $AP_4$ of base station 315). Each access point includes a radio access controller as known in the art for communicating with a plurality of wireless modems as represented by wireless modems 310-1 through 310-N (each wireless modem is associated with a wireless subscriber as represented by user personal computer (PC) 305-1 through user PC 305-N). (It should be noted that each PC is representative of data terminal equipment (DTE) as known in the art.) Each wireless modem communicates with a respective base station via an uplink channel (as represented by line 311) and a downlink channel (as represented by line 312). The combination of a wireless modem and user PC represents a wireless endpoint, which may, or may not, be mobile. Each base station is coupled to a private IP network through frame relay over T1/E1 facilities. The wireless internet access network is coupled to the public IP network through a data switching center (DSC) 330 to a router firewall 335, as known in the art, for communicating with Internet Service Providers (ISPs) or Corporate Intranets using L2TP, UDP/IP (User Datagram Protocol/Internet Protocol), etc.

It is assumed that the wireless internet access system illustrated by FIG. 3 utilizes a half-duplex MAC (media access control layer) between the base stations and the wireless endpoints where the downlink/uplink ratio is configurable or dynamically adjusted (e.g., as illustrated above, the downlink channel was 60% and the uplink channel was 40% of the total channel bandwidth). In this system, each AP polls their associated wireless modems for uplink transmissions. For example, in the context of FIG. 3, $AP_1$ polls the set of modems 310-1 through 310-N for any uplink transmissions (polling techniques are known in the art and not described herein).

In the downlink direction, the traffic management system 100 resides in the wireless hub (e.g., WH of base station 315 of FIG. 3). In this example, a WH comprises four traffic management systems, one for each AP of base station 315. When the WH has a packet for transmission to a particular user, e.g., the user associated with user PC 305-1, WH performs the method illustrated in FIG. 2 before sending a packet out to $AP_1$. The latter transmits packets to the wireless endpoint in a first-in-first-out (FIFO) fashion.

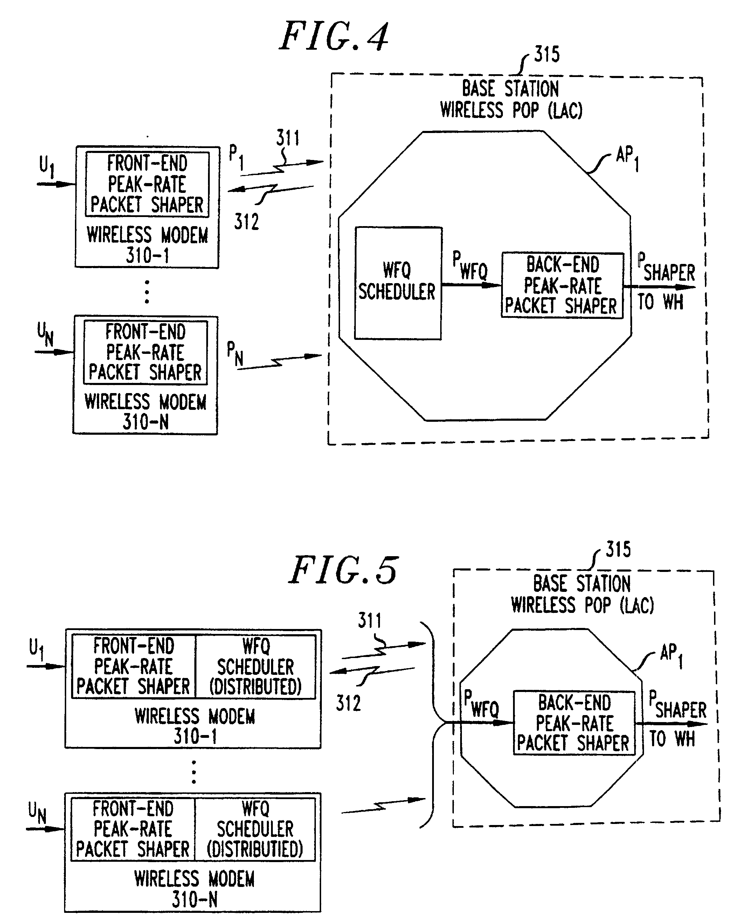

In the uplink direction, the traffic management system 100 is capable of a number of alternative implementations. One example is shown in FIG. 4, which shows a portion of the wireless internet access network of FIG. 3. Each front-end peak-rate traffic shaper is associated with user specific equipment, e.g., wireless modems 310-1 through 310-N. (Alternatively, the packet shaper could be a part of a user's PC (not shown), such a PC 305-1 of FIG. 3. Both the PC and the wireless modem are representative of a wireless endpoint.) As described for FIG. 1, each wireless modem receives a user packet flow, $U_i$. As described earlier, the front-end peak-rate packet shaper (of each wireless modem) shapes the traffic and transmits a respective packet flow, $P_i$, via an uplink channel, e.g., uplink channel 311, to their respective access point, e.g., $AP_1$, upon receipt of a transmit poll from their respective accept point, e.g., $AP_1$.

The WFQ scheduler 120 is run in a centralized manner at an AP (here, illustrated by $AP_1$ of FIG. 4). In this case, the associated wireless modems need to send queue size information (with respect to the number of bytes awaiting uplink transmission) to the respective AP (status transmissions from a mobile endpoint, such as received signal-to-noise ratio, are known in the and will not be described herein.). Each AP, e.g., $AP_1$ of FIG. 4, also implements the back-end peak-rate shaper (described earlier) to ensure that sufficient uplink bandwidth is available before issuing polls for its associated wireless modems (via downlink channel 312) using the above described method illustrated in FIG. 2. For example, if the value of *Bytes_remaining* is not sufficient to send at least one MAC fragment, the AP, e.g., $AP_1$, will not send a transmit poll to that wireless modem, e.g., wireless modem 310-1, until the next dwell. The *Bytes _remaining* variable is reset every dwell according to equation (2).

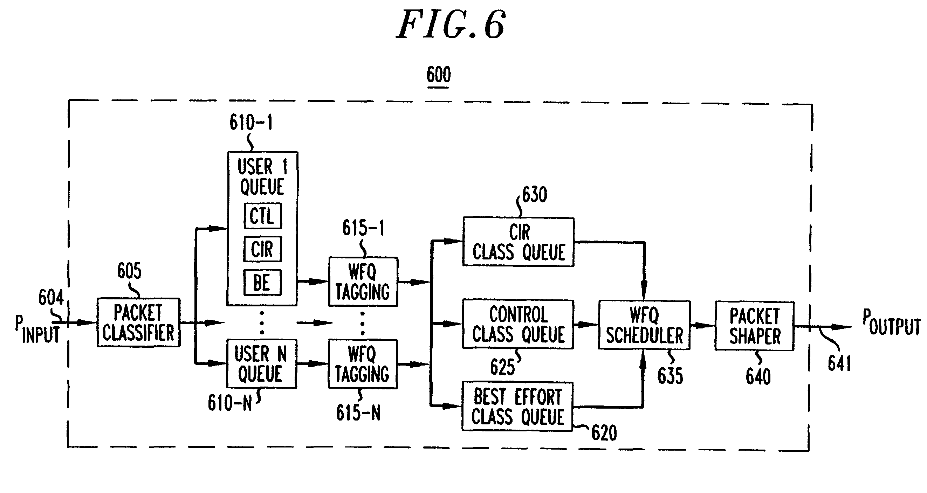

Another alternative implementation of a traffic management system is shown in FIG. 5. The system shown in FIG. 5 is similar to that shown in FIG. 4 except that the WFQ scheduler is run at each wireless modem in a distributed manner. This assumes that network elements, such as an AP (as represented by $AP_1$ of FIG. 5) broadcast the system virtual time and that each AP (e.g., $AP_1$) polls (e.g., via an downlink channel such as 312) their respective wireless modems for any uplink transmissions (as represented by uplink channel 311).

It should be noted that it is hard to estimate the available downlink/uplink bandwidth for a packet payload since both the packet payload is variable as is the total MAC overhead, which itself is a function of the size of the packet payload. However, the Back-End Peak-Rate Traffic Shaper is a flexible way to ensure that packets are not transmitted at a rate higher than the available downlink/uplink bandwidth, which could cause queuing delays in other network elements (such as an access point of a wireless internet access systems).

Another alternative implementation is shown in FIG. 6. In FIG. 6, traffic management system 600 comprises packet classifier 605; a number of user queues, as represented by user 1 queue 610-1 through user N queue 610-N; a number of WFQ Tagging elements 615-1 through 615-N; three class queues as represented by CIR (committed information rate) class queue 630, control class queue 625, and best effort class queue 620; WFQ scheduler 635 and packet shaper 640. Essentially, traffic management system 600 functions in a similar fashion to traffic management system 100 of FIG. 1 except as noted below.

In traffic management system 600 there are three classes of service for packet traffic. These classes of service (CoS) are: committed information rate (CIR), control, and best effort. Control represents control information, e.g., signaling and status. The CIR class and best effort class represent the transport of user, i.e., bearer, data. For users that get CIR service, the service provider (not shown) specifies the committed information rate (CIR), the burst rate (Br) and the burst size (Bs), similar to parameters specified for traditional frame relay service. For best effort (BE) service, the service provider specifies the maximum information rate for an individual user. Assignment of a user to either the CIR or best effort class is performed by call admission procedures (not described herein).

Incoming packets (represented by $P_{input}$) are applied to packet classifier 605, which classifies, or identifies, incoming packets by user and assigns them to the appropriate user queue (e.g., packets from user 1 are assigned to the queue for user 1, here represented by 610-1). Each user queue stores packets after user classification. Each user can have three classes of traffic as illustrated by user 1 queue 610-1. In particular, control (CTL), CIR and BE. If a user queue is full, excess packets are discarded. Each respective tagging element, e.g., WFQ tagging element 615-1, assigns service tags for its respective user queue, e.g., user 1 queue 610-1. As noted above, the SCFQ algorithm is illustratively used to assign service tags. Once instance of SCFQ is initiated for each class. These service tags are assigned based on the bit rate assigned to the user and the length of the packet. The service tags are used to create an ordered queue of outbound packets. Packets (appropriately identified by class and service tag) are routed to their particular class queue. Those packets identified as control are queued in control class queue 625; those packets identified as CIR class are queued in CIR class queue 630; and those packets identified as best effort class are queued in best effort class queue 620.

The control class queue 625 is used for control packets that are sent in the bearer plane. One illustration of such packets are PPP (point-to-point protocol) control packets. All users, when they connect will be allowed to send and receive a small number of packets via this queue to ensure that PPP negotiations conclude successfully, even under heavy loads. During the PPP negotiations phase, all CIR class users will be assigned the same weight. All best effort class users will also be assigned the same rate. The CIR class weight will be higher than the best effort weight to give CIR users higher priority than best effort users during PPP negotiations. Packets in CIR class queue 630 are queued in order of service tag values. Similarly, packets in the best effort class queue 620 are queued in order of service tag values. WFQ Scheduler 635 transmit packets from the three class queues based on the fraction of the link bandwidth assigned to each class or based on an absolute priority across classes (e.g., control packets are higher in priority than CIR packets, which are higher than BE packets). As noted above, weighted fair queuing is used for this function. This ensures that each class gets a fair share of the available bandwidth of the link.

Packet shaper 640 performs the above-described back-end peak-rate packet shaping function to limit the maximum data transmit rate over the physical link. This allows different types of traffic (represented by $P_{output}$) to share a physical link, for example sharing a frame relay PVC between network management and bearer traffic.

The traffic management system of FIG. 6 can be applied to the wireless internet access network shown in FIG. 3. For example, in the downlink direction, the traffic management system 600 resides in the wireless hub (e.g., WH of base station 315 of FIG. 3). In this example, a WH comprises four traffic management systems, one for each AP of base station 315. When the WH has a packet for transmission to a particular user, e.g., the user associated with user PC 305-1, WH performs the method illustrated in FIG. 2 before sending a packet out to $AP_1$. The latter transmits packets to the wireless endpoint in a first-in-first-out (FIFO) fashion.

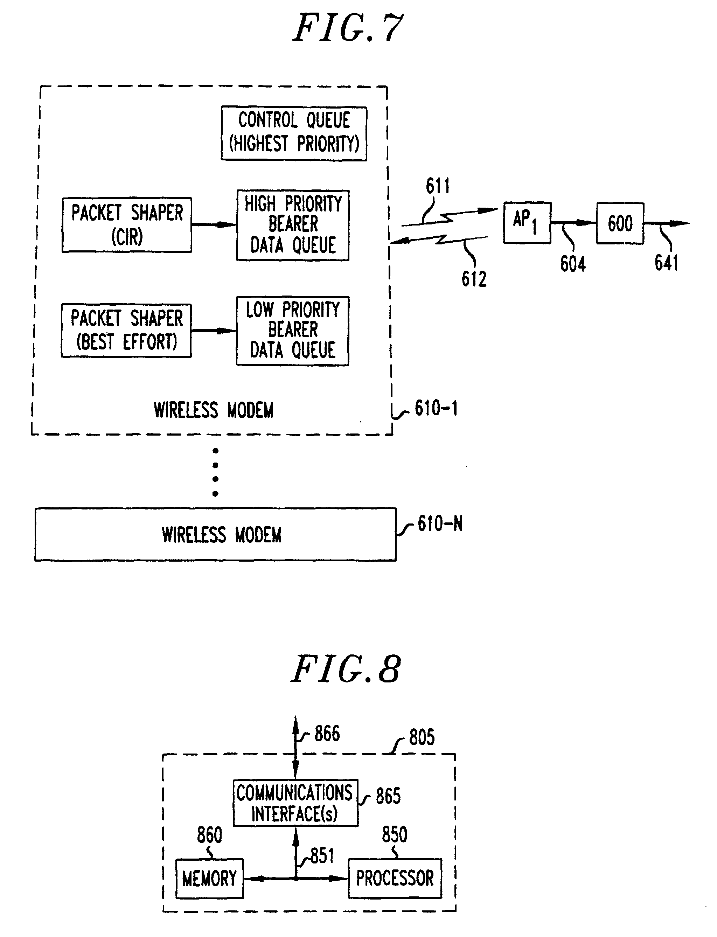

Similarly, in the uplink direction, an illustrative embodiment of the traffic management system 600 is shown in FIG. 7. Each front-end peak-rate traffic shaper is associated with user specific equipment, e.g., wireless modems 610-1 through 610-N. (Alternatively, the packet shaper could be a part of a user's PC (not shown)) As described for FIG. 1, each wireless modem receives a user packet flow (not shown). In this example, there is a packet shaping function for each of the bearer traffic classes (e.g., CIR and best effort). (It should be observed that it is assumed that control class data is generated internally by each wireless modem.) In order to support multiple classes, the MAC must be modified (such a modification is straightforward and will not be described herein). As described earlier, each front-end peak-rate packet shaper (of each wireless modem) shapes the traffic and transmits a respective packet flow, $P_i$, via an uplink channel, e.g., uplink channel 611, to their respective access point, e.g., $AP_1$, upon receipt of a transmit poll from their respective accept point, e.g., $AP_1$.

In this example, each class of uplink traffic awaits transmission in a respective queue. As noted above, the highest priority service class will be used for control messages (such packets awaiting transmission are stored in the control queue of each wireless modem). The next lower priority service class will be used to support committed information rate service (such packets awaiting transmission are stored in the high priority bearer data queue of each modem). The lowest priority service class will be used to support best effort users (such packets awaiting transmission are stored in the low priority bearer data queue of each modem). While bidding for permission to transmit data in the uplink direction, each wireless modem indicates to its respective AP the number of bytes (or packets) in its queue that belong to each service level. The respective AP implements a weighted scheduler that assigns transmit permits to wireless modems based on the uplink data that that each WM has to transmit and the weights assigned to each class of traffic. In this example, control data is higher than CIR data, which is higher than best effort data. Each AP will transmit all packets to traffic management system 600 (described above) of a wireless hub (WH) in FIFO order. (It should be noted that the AP may give retransmitted packets higher priority.)

Turning briefly to FIG. 8, a high-level block diagram of a representative packet server for use in accordance with the principles of the invention is shown. Packet server 805 is a stored-program-control based processor architecture and includes processor 850, memory 860 (for storing program instructions and data, e.g., for performing the above-described method shown in FIG. 2, etc.) and communications interface(s) 865 for coupling to one or more packet communication paths as represented by path 866.

The traffic management system described above is useful for providing virtual lease line services to users (also referred to as end users). In particular, each user can buy a service that guarantees certain average and peak bandwidths since the traffic management system described above provides both peak rate shaping and average bandwidth guarantee.

The foregoing merely illustrates the principles of the invention and it will thus be appreciated that those skilled in the art will be able to devise numerous alternative arrangements which, although not explicitly described herein, embody the principles of the invention and are within its scope. For example, although illustrated in the context of a wireless system, the inventive concept is applicable to any system (e.g., wired, etc.) that addresses QoS. Similarly, although illustrated in the context of a half-duplex MAC layer, it is equally applicable to a full-duplex MAC layer.

## Claims

1. A traffic management system for use in a packet system including a number of wireless endpoints, each wireless endpoint comprising a front-end peak rate shaper (105) for shaping a respective packet flow so as to comply with a negotiated network connection, **CHARACTERISED BY**:
   a base station comprising a back-end packet-shaper (130) and a waited fair queuing scheduler (120), said back-end packet-shaper adapted for shaping an output packet flow provided by said weighted fair queuing scheduler (120), said back-end packet-shaper ensuring that an overall peak rate does not exceed available bandwidth over a communications channel.

2. The traffic management system of claim 1 wherein at least one of the wireless endpoints comprises data terminal equipment and a wireless modem, which further comprises one of the front-end peak rate shapers.

3. The traffic management system of claim 1 wherein at least one of the wireless endpoints comprises a wireless modem and data terminal equipment, which further comprises one of the front-end peak rate shapers.

**4.** The traffic management system of Claim 1, further including:

   a packet classifier (605);
   a plurality of user queues (610), each user queue storing packets identified by the packet classifier as belonging to a respective user;
   a plurality of packet tagging elements (615), each tagging element associated with one of the user queues and wherein each tagging element attaches service tags to packets stored in their associated user queues;
   a number of class queues (620, 625, 630) for further segregating the service tagged packets according to packet class, wherein the servicing in the weighted fair queuing scheduler is a function of packet class and service tag and wherein a front-end rate shaper is associated with each of said user queues.

**5.** A method for use in a packet system, the method comprising the steps of:

   front end shaping packet flows (105) from each of a number of wireless endpoints for transmission to a base station said shaping performed so as to comply with a negotiated network connection; **CHARACTERISED BY** in said base station:

   servicing the shaped packet flows from each of the number of wireless endpoints with a weighted fair queuing scheduler (120); and
   further back end shaping the serviced packet flows (130) to provide an output packet flow, said back-end packet-shaping ensuring that an overall peak rate does not exceed available bandwidth over a communications channel.

**6.** The method of claim 5 wherein at least one wireless endpoint comprises a wireless modem and the shaping step includes the step of shaping at least one packet flow within the wireless modem.

**7.** The method of claim 5 wherein at least one wireless endpoint comprises data terminal equipment and the shaping step includes the step of shaping at least one packet flow within the data terminal equipment.

**8.** The method of claim 5, further comprising the steps of:

   identifying packets from different users for storage in a respective user queue;
   tagging the packets stored in each user queue with a service tag;
   queuing the service tagged packets according to one of a number of packet classes, wherein the servicing in the weighted fair queuing scheduler is a function of packet class and service tag and wherein a front-end rate shaper is associated with each of said user queues.

**Patentansprüche**

**1.** Verkehrsmanagementsystem zur Verwendung in einem Paketsystem, enthaltend eine Anzahl drahtloser Endpunkte, wobei jeder drahtlose Endpunkt einen vorgelagerten Peak-Rate-Shaper (105) zum Formen eines entsprechenden Paketstroms umfasst, um so einer vereinbarten Netzverbindung zu entsprechen, **gekennzeichnet durch**:

   eine Basisstation, umfassend einen nachgelagerten Paket-Shaper (130) und eine Weighted-Fair-Queuing-Ablaufsteuerung (120), wobei der nachgelagerte Paket-Shaper zum Formen eines abgehenden Paketstroms ausgelegt ist, der von der Weighted-Fair-Queuing-Ablaufsteuerung (120) bereitgestellt wird, und garantiert, dass eine gesamte Peak-Rate die verfügbare Bandbreite über einen Kommunikationskanal nicht überschreitet.

**2.** Verkehrsmanagementsystem nach Anspruch 1, wobei wenigstens einer der drahtlosen Endpunkte ein Datenendgerät und ein drahtloses Modem umfasst, das des Weiteren einen der vorgelagerten Peak-Rate-Shaper umfasst.

**3.** Verkehrsmanagementsystem nach Anspruch 1, wobei wenigstens einer der drahtlosen Endpunkte ein drahtloses Modem und ein Datenendgerät umfasst, das des Weiteren einen der vorgelagerten Peak-Rate-Shaper umfasst.

**4.** Verkehrsmanagementsystem nach Anspruch 1, des Weiteren umfassend:

einen Paket-Klassifizierer (605);

mehrere Benutzerwarteschlangen (610), wobei jede Benutzerwarteschlange Pakete speichert, die von dem Paket-Klassifizierer als zu einem entsprechenden Benutzer gehörig identifiziert wurden;

mehrere Paketkennungselemente (615), wobei jedes Kennungselement einer der Benutzerwarteschlangen zugeordnet ist, und wobei jedes Kennungselement Dienstkennungen an Pakete heftet, die in ihren zugehörigen Benutzerwarteschlangen gespeichert sind;

eine Anzahl von Klassenwarteschlangen (620, 625, 630) zur weiteren Trennung der Pakete mit Dienstkennung entsprechend der Paketklasse, wobei die Bedienung in der Weighted-Fair-Queuing-Ablaufsteuerung eine Funktion der Paketklasse und der Dienstkennung ist, und wobei ein vorgelagerter Rate-Shaper jeder der Benutzerwarteschlangen zugeordnet ist.

**5.** Verfahren zur Verwendung in einem Paketsystem, wobei das Verfahren folgende Schritte umfasst:

vorgelagertes Shaping von Paketströmen (105) von jedem einer Reihe drahtloser Endpunkte zur Übertragung an eine Basisstation, wobei das Shaping so durchgeführt wird, dass es einer vereinbarten Netzverbindung entspricht; **dadurch gekennzeichnet, dass** die Basisstation:

die geformten Paketströme von jeder der Reihe drahtloser Endpunkte mit einer Weighted-Fair-Queuing-Ablaufsteuerung (120) bedient; und

des Weiteren ein nachgelagertes Shaping an den bedienten Paketströmen (130) durchführt, um einen abgehenden Paketstrom bereitzustellen, wobei das nachgelagerte Paket-Shaping garantiert, dass eine gesamte Peak-Rate die verfügbare Bandbreite über einen Kommunikationskanal nicht überschreitet.

**6.** Verfahren nach Anspruch 5, wobei wenigstens ein drahtloser Endpunkt ein drahtloses Modem umfasst und der Shaping-Schritt den Schritt des Formens wenigstens eines Paketstroms innerhalb des drahtlosen Modems umfasst.

**7.** Verfahren nach Anspruch 5, wobei wenigstens ein drahtloser Endpunkt ein Datenendgerät umfasst und der Shaping-Schritt den Schritt des Formens wenigstens eines Paketstroms innerhalb des Datenendgeräts umfasst.

**8.** Verfahren nach Anspruch 5, des Weiteren umfassend die Schritte:

des Identifizierens von Paketen von verschiedenen Benutzern zum Speichern in einer entsprechenden Benutzerwarteschlange;

des Kennzeichnens der Pakete, die in jeder Benutzerwarteschlange gespeichert sind, mit einer Dienstkennung;

des Einreihens der Pakete mit Dienstkennung entsprechend einer von einer Reihe von Paketklassen in eine Warteschlange, wobei die Bedienung in der Weighted-Fair-Queuing-Ablaufsteuerung eine Funktion der Paketklasse und der Dienstkennung ist und wobei ein vorgelagerter Rate-Shaper jeder der Benutzerwarteschlangen zugeordnet ist.

## Revendications

**1.** Système de gestion de trafic destiné à être utilisé dans un système par paquets comportant un certain nombre de points d'extrémité sans fil, chaque point d'extrémité sans fil comprenant un circuit de mise en forme de débit de pointe frontal (105) pour mettre en forme un flux de paquets respectif de manière à ce qu'il soit conforme à une connexion de réseau négociée, **CARACTERISE PAR** :

une station de base comprenant un circuit de mise en forme de paquets arrière (130) et un ordonnanceur de mise en file d'attente équitable pondérée (120), ledit circuit de mise en forme de paquets arrière étant adapté pour mettre en forme un flux de paquets de sortie fourni par ledit ordonnanceur de mise en file d'attente équitable pondérée (120), ledit circuit de mise en forme de paquets arrière garantissant qu'un débit de pointe global ne dépasse pas une largeur de bande disponible sur un canal de communications.

2. Système de gestion de trafic selon la revendication 1, dans lequel au moins un des points d'extrémité sans fil comprend un équipement terminal de données et un modem sans fil, lequel comprend en outre l'un des circuits de mise en forme de débit de pointe frontal.

3. Système de gestion de trafic selon la revendication 1, dans lequel au moins un des points d'extrémité sans fil comprend un modem sans fil et un équipement terminal de données, lequel comprend en outre un des circuits de mise en forme de débit de pointe frontal.

4. Système de gestion de trafic selon la revendication 1, comportant en outre :

un classificateur de paquets (605) ;
une pluralité de files d'attente d'utilisateur (610), chaque file d'attente d'utilisateur mémorisant des paquets identifiés par le classificateur de paquets comme appartenant à un utilisateur respectif ;
une pluralité d'éléments d'étiquetage de paquets (615), chaque élément d'étiquetage étant associé à l'une des files d'attente d'utilisateur et dans lequel chaque élément d'étiquetage attache des étiquettes de service aux paquets mémorisés dans leurs files d'attente d'utilisateur associées ;
un certain nombre de files d'attente de classe (620, 625, 630) pour séparer davantage les paquets à étiquettes de service conformément à une classe de paquets, dans lequel la desserte dans l'ordonnanceur de mise en file d'attente équitable pondérée est fonction de la classe de paquets et de l'étiquette de service et dans lequel un circuit de mise en forme de débit frontal est associé à chacune desdites files d'attente d'utilisateur.

5. Procédé destiné à être utilisé dans un système par paquets, le procédé comprenant les étapes de :

mise en forme frontale de flux de paquets (105) provenant de chacun d'un certain nombre de points d'extrémité sans fil en vue de leur transmission à une station de base, ladite mise en forme étant effectuée de manière à satisfaire à une connexion de réseau négociée ; **CARACTERISE PAR** dans ladite station de base :

la desserte des flux de paquets mis en forme provenant de chacun d'un certain nombre de points d'extrémité sans fil avec un ordonnanceur de mise en file d'attente équitable pondérée (120) ; et
en outre la mise en forme arrière des flux de paquets desservis (130) afin de fournir un flux de paquets de sortie, ladite mise en forme de paquets arrière garantissant qu'un débit de pointe global ne dépasse pas une largeur de bande disponible sur un canal de communications.

6. Procédé selon la revendication 5, dans lequel au moins un point d'extrémité sans fil comprend un modem sans fil et l'étape de mise en forme comporte l'étape de mise en forme d'au moins un flux de paquets dans le modem sans fil.

7. Procédé selon la revendication 5, dans lequel au moins un point d'extrémité sans fil comprend un équipement terminal de données et l'étape de mise en forme comporte l'étape de mise en forme d'au moins un flux de paquets dans l'équipement terminal de données.

8. Procédé selon la revendication 5, comprenant en outre les étapes de :

identification de paquets provenant de différents utilisateurs en vue de leur mémorisation dans une file d'attente d'utilisateur respective ;
étiquetage des paquets mémorisés dans chaque file d'attente d'utilisateur avec une étiquette de service ;
mise en file d'attente des paquets à étiquettes de service conformément à l'une d'un certain nombre de classes de paquets, dans lequel la desserte dans l'ordonnanceur de mise en file d'attente équitable pondérée est fonction de la classe de paquets et de l'étiquette de service et dans lequel un circuit de mise en forme de débit frontal est associé à chacune desdites files d'attente d'utilisateur.

# *FIG.1*

100

# *FIG.2*

# FIG.3

300

BASE STATION
WIRELESS POP (LAC)
315

311
312

305-1
USER PC

310-1
WIRELESS
MODEM

305-N
USER PC

310-N
WIRELESS
MODEM

TO OTHER
WIRELESS
ENDPOINTS

AP₁  AP₂  AP₃  AP₄

WH

FRAME RELAY
T1/E1

PRIVATE IP NETWORK

DSC
330

335
ROUTER/FIREWALL

L2TP
UDP/IP

PUBLIC IP NETWORK
(BACKBONE)

ROUTERS/FIREWALLS
OF, e.g., CORPORATIONS

L2TP
UDP/IP

ROUTERS/FIREWALLS
OF ISPs

L2TP
UDP/IP

FRAME RELAY
T1/E1

BASE STATION
WIRELESS POP (LAC)

WIRELESS INTERNET ACCESS NETWORK

EP 1 124 356 B1

12

EP 1 124 356 B1

## FIG.4

315

BASE STATION
WIRELESS POP (LAC)

$U_1$ → FRONT-END PEAK-RATE PACKET SHAPER / WIRELESS MODEM 310-1

$P_1$   311   312

$AP_1$

WFQ SCHEDULER → $P_{WFQ}$ → BACK-END PEAK-RATE PACKET SHAPER → $P_{SHAPER}$ TO WH

$U_N$ → FRONT-END PEAK-RATE PACKET SHAPER / WIRELESS MODEM 310-N

$P_N$

## FIG.5

315

BASE STATION
WIRELESS POP (LAC)

$U_1$ → FRONT-END PEAK-RATE PACKET SHAPER | WFQ SCHEDULER (DISTRIBUTED) / WIRELESS MODEM 310-1

311   312

$AP_1$

$P_{WFQ}$ → BACK-END PEAK-RATE PACKET SHAPER → $P_{SHAPER}$ TO WH

$U_N$ → FRONT-END PEAK-RATE PACKET SHAPER | WFQ SCHEDULER (DISTRIBUTIED) / WIRELESS MODEM 310-N

## FIG.6

## FIG.7

CONTROL QUEUE
(HIGHEST PRIORITY)

PACKET SHAPER
(CIR) → HIGH PRIORITY
BEARER
DATA QUEUE

PACKET SHAPER
(BEST EFFORT) → LOW PRIORITY
BEARER
DATA QUEUE

WIRELESS MODEM                    610-1

611

612

AP₁    604    600    641

⋮

WIRELESS MODEM                    610-N

## FIG.8

866    805

COMMUNICATIONS
INTERFACE(s)    865

860    851    850

MEMORY    PROCESSOR